# EUROPEAN PATENT APPLICATION

(11) **EP 2 733 088 A1**
(43) Date of publication of application: **21.05.2014**
(21) Application number: 12811996.3
(22) Date of filing: 30.05.2012
(51) Int. Cl.: B65D 81/24, C08J 5/18, C08L 101/16

(54) **PACKAGE COMPRISING PACKAGING MATERIAL AND BIODEGRADABLE PRODUCT FOR AGRICULTURE AND FORESTRY**

(30) Priority: 12.07.2011 JP 2011153510
(71) Applicant: Toray Industries, Inc., Tokyo 103-8666 (JP)
(72) Inventor: MATSUMOTO, Taisei, Shiga 520-8558 (JP)
(74) Representative: Prüfer & Partner GbR European Patent Attorneys
(86) International application number: PCT/JP2012/063850
(87) International publication number: WO 2013/008551

(57) **Abstract**

The present invention relates to a package which comprises a packaging material and a biodegradable product for agriculture and forestry. In particular, the present invention provides a biodegradable multifilm roll for agriculture, which has excellent storage stability and excellent handling properties. The present invention is a package which comprises a packaging material and a biodegradable product for agriculture and forestry and which is characterized in that the packaging material has a water vapor permeability of 1 g/m²•day or less and the packaging material covers the biodegradable product for agriculture and forestry.

## Description

### TECHNICAL FIELD

The present invention relates to a package comprising a packaging material and a biodegradable product for agriculture and forestry, and in particular, relates to a package comprising a packaging material and a biodegradable mulch film roll for agriculture which has excellent storage stability and excellent handling properties.

### BACKGROUND ART

In the fields of agriculture and forestry, currently, a variety of products for agriculture and forestry having biodegradability such as a mulch film for agriculture, a net for vines, a weed-proofing sheet and a pine weevil fumigation sheet have been developed and have been prevailing. Among them, in the field of a mulch film for agriculture which is aimed at allowing the crops to grow and enhancing the crop yields, biodegradable products have begun to be particularly widely used.

In a common method of using a mulch film for agriculture, ridges having a mountain-shaped or plateau-shaped cross section and formed into a long, narrow and linear shape by piling soil are prepared, and the ridges are covered to thereby allow the film to cover the soil surface. After punching holes for settled planting in a mulch film, seedlings for crops are planted therethrough. For instance, the mulch film has been used for the purpose of keeping soil moist and warm in a period during which seedlings sufficiently spread their roots in soil, inhibiting the propagation of weeds during the period of allowing seedlings to grow and until crops are harvested, maintaining the shape of the ridge, and the like. Although one made of polyolefin typified by polyethylene has hitherto been used for the mulch film for agriculture, polyolefin needs to be recovered after use because polyolefin is not biodegraded even if left to stand under a natural environment. Moreover, the mulch film after use which has been physically deteriorated and soiled is difficult to be reused, and in most cases, although there is no choice but to throw out it, there is still a problem that waste disposal cost is required.

For solving the problem, a biodegradable mulch film for agriculture which can be used in the same way as the conventional mulch made of polyolefin with regard to the usable period as a mulch film for agriculture and is also completely degraded by microorganisms in the soil by directly plowing the film into soil after use has been studied. As such biodegradable mulch films for agriculture, films in which a biodegradable resin such as an aliphatic polyester having a specific structure is used have been studied. However, as such biodegradable resins, resins having high degradability, particularly hydrolyzability, in order to apply them to their uses are used and they have such a feature that performances such as mechanical characteristics are deteriorated appreciably after a lapse of six months or more from production. Therefore, made-to-order is foundations, and production in advance has not been possible. Moreover, with regard to a biodegradable mulch film roll for agriculture purchased by a farmer, in the case where an unused part of the roll is left behind, it cannot be used next year after storage, and there is a problem that it directly becomes industrial waste and the like.

Furthermore, even during transport or during use, in the biodegradable mulch film roll for agriculture, compared to the conventional mulch film roll made of polyolefin, blocking is easily caused by an impression made by blow when strong impact is locally applied, and the mulch film is broken from the impression made by blow on mulching, in many cases.

Patent Document 1 discloses a method for storing a polylactic acid film that is plasticized, in particular, with a liquid plasticizer, in which, by setting the storage temperature to a temperature lower than the glass transition temperature thereof by 5°C or more and setting the relative humidity to 90%RH or less, the retention of a weight average molecular weight of the film after a lapse of two months from the initiation of storage is 80% or more.
Patent Document 1: Japanese Patent Laid-open Publication No. 2003-55484

### SUMMARY OF THE INVENTION

### PROBLEMS TO BE SOLVED BY THE INVENTION

The technique described in Patent Document 1 has been too difficult for practical use because, for instance, as described in Examples, a temperature of about 30°C or lower is required for the actual storage temperature, and special air-conditioning equipment is required in a warehouse, a container of a transport truck, or the like at high temperatures in summer. Moreover, even if an unused part of a biodegradable mulch film roll for agriculture purchased by a farmer is stored in accordance with the technique, it fails to be reused after one year because the deterioration in performance is significant. Furthermore, in the biodegradable mulch film for agriculture of polylactic acid plasticized with a liquid plasticizer disclosed in Patent Document 1, for instance, blocking caused by the bleed-out of the liquid plasticizer easily occurs, and furthermore, blocking easily proceeds with the lapse of time since the moisture absorption amount is large under a relative humidity of 90%RH or less. The technique has been quite insufficient for practical use.

Thus, in view of such a prior-art background, the present invention relates to a package comprising a packaging material and a biodegradable product for agriculture and forestry, and in particular, aims to provide a package comprising a packaging material and a biodegradable mulch film roll for agriculture which has excellent storage stability and excellent handling properties.

### SOLUTIONS TO THE PROBLEMS

In the present invention, for solving the above-mentioned problems, the following means are employed. That is, the package comprising a packaging material and a biodegradable product for agriculture and forestry according to the present invention is as follows.
1) A package comprising a packaging material and a biodegradable product for agriculture and forestry, wherein the packaging material has a moisture permeability of 1 g/(m²•day) or less and the packaging material covers the biodegradable product for agriculture and forestry.
2) The package described in 1), wherein the packaging material is a layered body, one outermost layer thereof is a heat seal layer, the heat seal layer is allowed to face inward (the side of the biodegradable product for agriculture and forestry) and an end part is covered.
3) The package described in 1) or 2), wherein the packaging material is a layered body and has a layer of aluminum.
4) The package described in any one of 1) to 3), wherein the packaging material is a layered body, one outermost layer thereof is a layer of paper, a film, a foam sheet, nonwoven fabric, or a foamed body (hereinafter, this layer is referred to as Layer A), the Layer A is allowed to face outward (the side where the biodegradable product for agriculture and forestry is not located) and the packaging material covers the biodegradable product for agriculture and forestry.
5) The package described in any one of 1) to 4), wherein the biodegradable product for agriculture and forestry is a biodegradable mulch film roll for agriculture.
6) The package described in 5), wherein the biodegradable mulch film roll for agriculture comprises a composition formed mainly of an aliphatic polyester and the glass transition temperature Tg of the composition is 45°C or lower.
7) The package described in 6), wherein the aliphatic polyester is polylactic acid and the composition contains a plasticizer that is solid at room temperature.

### EFFECTS OF THE INVENTION

The present invention relates to a package comprising a packaging material and a biodegradable product for agriculture and forestry, and in particular, a package comprising a packaging material and a biodegradable mulch film roll for agriculture which has excellent storage stability and excellent handling properties is provided. In the present invention, production in advance is possible in the manufacturing and selling stages and long-term storage is possible for a farmer who purchased it, and moreover, since there is no problem caused by blocking and the like, the package is excellent in handling properties and can be preferably used as a biodegradable mulch film.

### EMBODIMENTS OF THE INVENTION

As a result of extensive researches on the problems, a package comprising a packaging material and a biodegradable product for agriculture and forestry, in particular, a package comprising a packaging material and a biodegradable mulch film roll for agriculture which has excellent storage stability and excellent handling properties, the present inventor has found that, by employing a packaging material having a specific moisture permeability, the storage stability of a package for uses in farming and forestry performed at a 1-year cycle is remarkably enhanced, and by specifying the constitution of a packaging material and employing a specific compound as a plasticizer for the film, there is no problem caused by blocking and the like which easily occur during transport or during use, and excellent handling properties are attained. Moreover, the present inventor has found that, by applying them, they greatly contribute to the industrial production of a biodegradable mulch film for agriculture having stable quality and finally contribute to the reduction of industrial wastes, and the problems have been successfully solved for the first time.

Hereinafter, the package comprising a packaging material and a biodegradable product for agriculture and forestry according to the present invention will be described.

The biodegradable product for agriculture and forestry in the present invention refers to a product which is used in the field of agriculture or forestry such as a mulch film roll for agriculture, a net for vines, a weed-proofing sheet and a pine weevil fumigation sheet, and is formed mainly of a biodegradable resin. In particular, a mulch film means a film with which an object is covered for use, and for instance, with regard to a mulch film for agriculture which is one embodiment of the mulch film, it is a film used for covering the soil surface on which the crops exist.

With regard to the biodegradable product for agriculture and forestry, "formed mainly of a biodegradable resin" means containing a biodegradable resin at the largest content in terms of mass ratio relative to all components constituting the product. Moreover, it is preferred to make the content of the biodegradable resin in the biodegradable product for agriculture and forestry larger. Relative to 100% by mass of all components constituting the product, the content of the biodegradable resin is preferably 50% by mass or more and 100% by mass or less, and the content of the biodegradable resin is more preferably 80% by mass or more and 100% by mass or less. In the case where the biodegradable product for agriculture and forestry is a biodegradable mulch film roll for agriculture, with regard to the biodegradable product for agriculture and forestry, "formed mainly of a biodegradable resin" means containing a biodegradable resin at the largest content in terms of mass ratio relative to all components constituting the film portion, without taking the core in the roll into consideration.

As a result of extensive researches on the storage stability and handling properties which are great drawbacks of the conventional package comprising a packaging material and a biodegradable product for agriculture and forestry, the present inventor has found that, by using a packaging material having a specific moisture permeability as the packaging material, the storage stability is remarkably enhanced. That is, the package according to the present invention is a package comprising a packaging material and a biodegradable product for agriculture and forestry in which the moisture permeability of the packaging material is 1 (g/m²•day) or less and the biodegradable product for agriculture and forestry is covered.

Herein, covering refers to tightly sealing a biodegradable product for agriculture and forestry with a packaging material, and the method therefor is not restricted.

Hereinafter, the case of a biodegradable mulch film for agriculture as a typical example of the biodegradable product for agriculture and forestry will be described in detail.

The biodegradable product for agriculture and forestry, in particular a biodegradable mulch film for agriculture, according to the present invention is a product formed mainly of a variety of biodegradable resins. Biodegradable referred to here is defined as allowing the biodegradability determined according to JIS K6953-2000 to amount to 60% or more and 100% or less within 180 days. Since the time period during which a general mulch film for agriculture is used is commonly three months at the shortest and about six months at the longest, the biodegradable mulch film for agriculture is required to have a biodegradability which reaches 60% or more and 100% or less within 180 days at the latest, as the biodegradability.

Although the biodegradable resin that can be used for a biodegradable product for agriculture and forestry, in particular a biodegradable mulch film for agriculture, is not particularly limited, the biodegradable resin is exemplified by aliphatic polyesters. Examples thereof include polyhydroxy carboxylic acids such as polylactic acid and polyglycolic acid; microbiologically produced polyesters such as poly(3-hydroxybutyrate) and poly(3-hydroxybutyrate•3-hydroxyvalerate); polycaprolactones; aliphatic polyesters of an aliphatic diol such as ethylene glycol or 1,4-butanediol and an aliphatic dicarboxylic acid such as succinic acid or adipic acid; and copolymers of an aliphatic polyester such as poly(butylene succinate•terephthalate) or poly(butylene adipate•terephthalate) and an aromatic polyester. Moreover, as the biodegradable resin other than the aliphatic polyester, polyvinyl alcohols, modified starches and the like may also be used.

Among them, examples of the biodegradable resin which is excellent in mechanical characteristics such as impact resistance and degradability and is suitable as a biodegradable mulch film for agriculture include polybutylene succinate based resins such as polybutylene succinate and poly(butylene succinate•adipate), modified polybutylene terephthalate based resins such as poly(butylene adipate•terephthalate), and polylactic acids plasticized by the addition of homo-polylactic acid or a plasticizer.

In the case where these biodegradable resins and moisture coexist, the deterioration in performance proceeds frequently in all of these biodegradable resins, for instance, aliphatic polyesters suffer from molecular weight reduction due to hydrolysis, polyvinyl alcohols dissolve into moisture, and modified starches allow the propagation of fungus.

The packaging material used for the package according to the present invention has a moisture permeability of 1 g/(m²•day) or less. When the moisture permeability exceeds 1 g/(m²•day), since the amount of moisture permeating into the inside of the package is larger and the deterioration of the biodegradable mulch film for agriculture proceeds excessively, it is not possible to impart the package with the storage stability for uses in farming and forestry performed basically at a 1-year cycle and aimed by the present invention. Furthermore, blocking easily occurs due to the deterioration and moisture absorption of the mulch film. Moreover, although it is preferred for the storage stability to make the moisture permeability smaller, the lower limit is 0.05 g/(m²•day) because, when a packaging material having an excessively low moisture permeability is employed, the industrial production thereof is more difficult and the packaging material is also economically disadvantageous. The moisture permeability of the packaging material used for the package according to the present invention is preferably 0.5 g/(m²•day) or less, more preferably 0.3 g/(m²•day) or less.

With regard to the packaging material used for the package according to the present invention, although it is important that the moisture permeability thereof be 1 g/ (m²•day) or less, in the case where a plurality of packaging materials are superposed and used as the packaging material, it is important that the moisture permeability of at least one packaging material be 1 g/(m²•day) or less.

Although no particular restriction is put on the method of allowing the moisture permeability of the packaging material to be 1 g/(m²•day) or less, a moisture-proofing film, moisture-proof paper and the like which are generally used may be used. Examples of the moisture-proofing film include a film of polyethylene, polypropylene, polyester, polyamide, polyvinylidene chloride, an ethylene-vinyl acetate resin (an ethylene-vinyl alcohol resin), vinyl acetate, polyvinyl alcohol, or the like, and a film prepared by layering these resins on other film as a base material by dry lamination, extrusion lamination, coating, or the like, and moisture-proof cellophane and a film of modified products thereof. Moreover, examples of the moisture-proof paper include one prepared by applying a high molecular compound such as polyethylene, polypropylene, or polyvinylidene chloride, various waxes, or latexes onto paper as a support, or by internally adding them. Moreover, in addition to those described above, a moisture-proofing film prepared by bonding a film as a base material and aluminum foil (layer of aluminum) and the like together or by forming a layer of aluminum, a layer of aluminum oxide, a layer of silicon oxide and the like on a film as a base material by a vapor deposition method or the like may also be used.

Examples of the preferred packaging material include, from the point that it is possible to impart the packaging material which is relatively thin in thickness with a moisture permeability of 1 g/(m²•day) or less, a layered body such as a film prepared by bonding a base material and aluminum foil (layer of aluminum) together and a film prepared by forming a metal layer such as a layer of aluminum on the surface or the inner surface of a base material by vapor deposition, and a film prepared by layering an ethylene-vinyl acetate resin (ethylene-vinyl alcohol resin) or polyvinylidene chloride on other film as a base material by dry lamination, extrusion lamination, coating, or the like. As more preferred example of the packaging material, a layered body such as a film prepared by bonding a base material and aluminum foil (layer of aluminum) together and a film prepared by forming a layer of aluminum on the surface or the inner surface of a base material by vapor deposition, in other words, as the packaging material, a layered body having a layer of aluminum is suitably used.

With regard to the package comprising a packaging material and a biodegradable product for agriculture and forestry according to the present invention, it is preferred that the packaging material be a layered body, one outermost layer thereof be a heat seal layer, the heat seal layer be allowed to face inward (the side of the biodegradable product for agriculture and forestry), and an end part be covered, for instance, by heat-sealing. In the constitution, it is possible to easily cover the whole biodegradable product for agriculture and forestry by completely heat-sealing the end part of the packaging material, and moreover, by changing the dimension of the packaging material or the heat-sealing position, the package can relatively easily cope with various sizes of biodegradable products for agriculture and forestry at the time of packaging. In the case where the packaging material is a layered body including a moisture-proofing film and one outermost layer thereof is a heat seal layer, the degree of moisture-proof of the heat seal layer is frequently lower than that of a moisture-proofing film part. When the heat seal width is too narrow, there is a possibility that the moisture permeability in a direction of allowing moisture to diffuse through the heat seal layer at the sealed part exceeds 1 g/(m²•day). However, practically, by heat-sealing an end part in a sufficient width depending on the material of the heat seal layer, it is also made possible to allow the moisture permeability to be 1 g/(m²•day) or less easily. For instance, in the case of a polyolefin based sealant or the like which is commonly frequently used, a heat seal width of 2 mm or more is satisfactory.

Herein, heat-sealing refers to bonding one surface of a film and the like to other surface by allowing an adhesive agent applied on the surface thereof or a thermoplastic resin having thermal fusibility layered on the surface thereof to be melted by the heat of a heater, an iron or the like. Then, the heat seal layer means a layer, such as an adhesive layer and a thermoplastic resin layer, which has characteristics capable of being melted by the heat of a heater, an iron or the like and of bonding to other surface.

Furthermore, for instance, in a biodegradable mulch film roll for agriculture as a preferred embodiment, although an unused part of the roll may be left behind after use thereof by a farmer or a farm, the end part of a packaging material in which a roll is previously placed is unsealed to take out the roll for use, thereafter the unused part of the roll is again inserted into the packaging material, and the end part of the packaging material is again heat-sealed using an iron for household use or the like, thereby making it possible to tightly seal and store the unused part of the roll. This is preferred because the unused part of the roll can be used next year by storing the unused part in a state of being moisture-proof and tightly sealed again in this way.

Examples of a method of providing a heat seal layer inside the packaging material which is a layered body include a method of bonding the moisture-proof film, moisture-proof paper or the like, and for instance, other film having a heat-sealing function such as a polyolefin based sealant together by adhesion or lamination to form a packaging material which is a layered body.

With regard to the package comprising a packaging material and a biodegradable product for agriculture and forestry according to the present invention, it is preferred that the packaging material be a layered body, one outermost layer thereof be a layer of paper, a film, a foam sheet, nonwoven fabric, or a foamed body (hereinafter, this layer is referred to as Layer A), the Layer A be allowed to face outward (the side where the biodegradable product for agriculture and forestry is not located) and the packaging material cover the biodegradable product for agriculture and forestry. In the case where the packaging material has the constitution, even if local impact and the like are unintentionally applied to the package during transport, storage or handling, the impact to the included biodegradable product for agriculture and forestry is relatively dispersed, and moreover, since a part thereof is absorbed by the packaging material, blocking caused by an impression made by blow is more difficult to occur. Furthermore, breakage of the moisture-proof film, moisture-proof paper or the like hardly occurs.

The biodegradable mulch film roll for agriculture as a preferred embodiment of the biodegradable product for agriculture and forestry according to the present invention preferably comprises a composition formed mainly of an aliphatic polyester and the glass transition temperature Tg of the composition is preferably 45°C or lower. As mentioned above, the aliphatic polyester is suitable as a biodegradable mulch film for agriculture from the viewpoints of mechanical characteristics such as impact resistance and degradability, and the same holds true for the composition formed mainly of an aliphatic polyester. Furthermore, when the glass transition temperature Tg of the composition is 45°C or lower, a mulch film excellent in flexibility required on mulching can be prepared. In this context, the glass transition temperature Tg refers to a value measured by the method described below to be obtained, and as described below, in the case where a plurality of numerical values are observed at the time of measuring a glass transition temperature of a composition constituting the film, a glass transition temperature observed on the most high temperature side is defined as Tg.

Moreover, a biodegradable mulch film roll for agriculture comprising a composition formed mainly of an aliphatic polyester means a biodegradable mulch film roll for agriculture of a composition containing an aliphatic polyester at the largest content (mass) in 100% by mass of the composition. With regard to a biodegradable mulch film roll for agriculture, "comprising a composition formed mainly of an aliphatic polyester" means containing an aliphatic polyester at the largest content (mass) in 100% by mass of all components constituting the film portion, without taking the core in the roll into consideration and with judging on the basis of all components constituting the film portion, in short, with exclusion of the core in the roll. The content of an aliphatic polyester is preferably 50% by mass or more and 100% by mass or less, more preferably 60% by mass or more and 90% by mass or less, relative to 100% by mass of the composition constituting the biodegradable mulch film roll for agriculture.

With regard to a composition which is formed mainly of an aliphatic polyester and has a Tg of 45°C or lower, although no particular restriction is put on the constitution thereof, for instance, the composition may be an aliphatic polyester having a Tg of 45°C or lower as a simple substance, may be a mixture of two or more kinds of aliphatic polyesters having a Tg of 45°C or lower, and may be a mixture of an aliphatic polyester having a Tg of higher than 45°C and a plasticizer therefor. Furthermore, the composition may comprise a component other than the aliphatic polyester without impairing the effect of the present invention.

As the case where a mixture of an aliphatic polyester having a Tg of higher than 45°C and a plasticizer therefor constitutes the composition which is formed mainly of an aliphatic polyester and has a Tg of 45°C or lower, for instance, the case of a mixture of polylactic acid and a plasticizer which is a preferred example of the present invention described below will be described. The glass transition temperature of polylactic acid as a simple substance which is one of aliphatic polyesters is 57°C. Subsequently, in the case where a polyethylene glycol based compound is used as a plasticizer therefor, the glass transition temperature of the plasticizer is 0°C or less and the value is different from that of polylactic acid as a simple substance. Furthermore, since polylactic acid as a simple substance and polyethylene glycol are compatible with each other, a composition which is a mixture thereof has a single glass transition temperature different from that of polylactic acid as a simple substance or the plasticizer, and the glass transition temperature Tg of the composition is 45°C or lower.

Examples of an aliphatic polyester having a glass transition temperature Tg of 45°C or lower include an aliphatic polyester of an aliphatic diol such as ethylene glycol or 1,4-butanediol and an aliphatic dicarboxylic acid such as succinic acid or adipic acid; a copolymer of an aliphatic polyester such as poly(butylene adipate•terephthalate) and an aromatic polyester; and a variety of random copolymers such as a polyhydroxy carboxylic acid copolymer of glycolic acid and lactic acid. The biodegradable mulch film roll for agriculture as a preferred embodiment of the biodegradable product for agriculture and forestry according to the present invention is preferably formed mainly of an aliphatic polyester composition of the aliphatic polyester as a simple substance or a mixture of the two or more aliphatic polyesters, and may further comprise a plasticizer described below.

As an example in which a mixture of an aliphatic polyester having a Tg of higher than 45°C and a plasticizer constitutes the composition which is formed mainly of an aliphatic polyester and has a Tg of 45°C or lower, an aliphatic polyester composition as a mixture of polylactic acid and a plasticizer, and the like are exemplified.

As a plasticizer that can be contained in a composition formed mainly of the aliphatic polyester, although one that is liquid at room temperature or one that is solid at room temperature may be used, a plasticizer that is solid at room temperature is preferred. Examples of the plasticizer include phthalic acid ester based ones such as diethyl phthalate, dioctyl phthalate and dicyclohexyl phthalate; aliphatic dibasic acid ester based ones such as di-1-butyl adipate, di-n-octyl adipate, di-n-butyl sebacate and di-2-ethylhexyl azelate; phosphoric acid ester based ones such as diphenyl-2-ethylhexyl phosphate and diphenyl octyl phosphate; polyhydroxycarboxylic acid ester based ones such as tributyl acetylcitrate, tri-2-ethylhexyl acetylcitrate and tributyl acetylcitrate; aliphatic ester based ones such as methyl acetylricinoleate and amyl stearate; polyhydric alcohol ester based ones such as glycerin triacetate and triethylene glycol dicaprylate; epoxy based plasticizers such as an epoxidized soybean oil, an epoxidized linseed oil fatty acid butyl ester and octyl epoxystearate; polyester based plasticizers such as polypropylene glycol sebacic acid ester; polyalkylene ether based ones; ether ester based ones; and acrylate based ones, and among them, a mixture of plural plasticizers may be used.

In this context, "being solid at room temperature" means having a freezing point measured according to JIS K0065-1992 of 25°C or higher.

Moreover, particularly in agriculture use, a plasticizer approved by the U. S. Food and Drug Administration (FDA), Japan Hygienic Olefin and Styrene Plastics Association (JHOSPA) or the like is preferred in view of the possibility of remaining of an undegraded material in compost or a farmland, though temporarily. Examples of such a plasticizer include triacetin, an epoxidized soybean oil, an epoxidized linseed oil, an epoxidized linseed oil fatty acid butyl ester, an adipic acid based aliphatic polyester, tributyl acetylcitrate, acetyl ricinoleate, glycerin fatty acid ester, sucrose fatty acid ester, sorbitan fatty acid ester, dialkyl adipate, bis(alkyldiglycol)adipate, or polyethylene glycol.

With regard to the biodegradable mulch film roll for agriculture as a preferred embodiment of the biodegradable product for agriculture and forestry according to the present invention, it is preferred that an aliphatic polyester as a primary component of the composition be polylactic acid, and furthermore, the composition contain a plasticizer that is solid at room temperature. In recent years, since attention is focused on plastics produced from plant-derived materials, which originate in carbon (carbon dioxide gas) in the atmosphere, it is also preferred to use polylactic acid, which is a plant-derived material and can be produced economically, as the mulch film roll.

In the case where polylactic acid is used for the biodegradable mulch film roll for agriculture according to the present invention, it is preferable to use one in which L-lactic acid and/or D-lactic acid are included as primary components and lactic acid-derived components account for 70% by mass or more and 100% by mass or less, and a homo-polylactic acid material that is virtually formed of L-lactic acid and/or D-lactic acid is preferably used. Furthermore, it is preferred that the polylactic acid have crystallinity. The polylactic acid that has crystallinity is defined as one that releases heat of crystal fusion attributed to polylactic acid components as determined by differential scanning calorimetry (DSC) in an appropriate temperature range after adequate crystallization of the polylactic acid by heating.

In the case where the polylactic acid used for the biodegradable mulch film roll for agriculture according to the present invention has crystallinity, the polylactic acid is suitable for imparting a film with blocking resistance at the time of forming a composition containing the polylactic acid into the film. Commonly, homo-polylactic acid increases in melting point and crystallinity with an increasing optical purity. Although the melting point and crystallinity of polylactic acid are affected by its molecular weight and catalysts used for its polymerization, commonly, a homo-polylactic acid material with an optical purity of 98% or more has a melting point of about 170°C or so and has a relatively high crystallinity. On the other hand, homo-polylactic acid decreases in melting point and crystallinity with a decreasing optical purity. A homo-polylactic acid material with an optical purity of 88%, for instance, has a melting point of about 145°C or so, and a homo-polylactic acid material with an optical purity of 75% has a melting point of about 120°C or so. A homo-polylactic acid material with an optical purity of less than 70% is generally non-crystalline and does not show a definite melting point.

The polylactic acid used for the biodegradable mulch film roll for agriculture according to the present invention commonly has a weight average molecular weight of at least 50,000, preferably 80,000 to 400,000, and further preferably 100,000 to 300,000. The weight average molecular weight referred to here is defined as a weight average molecular weight calculated by converting a value determined by gel permeation chromatography (GPC) using chloroform as a solvent in terms of polymethyl methacrylate. The weight average molecular weight of the polylactic acid is set to at least 50,000, and therefore, in the case where a composition containing the polylactic acid is formed into a film, the film can be excellent in mechanical properties.

Moreover, in the case where polylactic acid is used for the biodegradable mulch film for agriculture according to the present invention, the polylactic acid may be a copolymerized polylactic acid comprising an ester-forming monomer component copolymerized with L-lactic acid and/or D-lactic acid. Examples of the copolymerizable monomer component include not only hydroxycarboxylic acids such as glycolic acid, 3-hydroxybutyric acid, 4-hydroxybutyric acid, 4-hydroxyvaleric acid, and 6-hydroxycaproic acid, but also compounds containing two or more hydroxyl groups in one molecule such as ethylene glycol, propylene glycol, butanediol, neopentyl glycol, polyethylene glycol, glycerin, and pentaerythritol; derivatives thereof; compounds containing two or more carboxylic acid groups in one molecule such as succinic acid, adipic acid, sebacic acid, fumaric acid, terephthalic acid, isophthalic acid, 2,6-naphthalene dicarboxylic acid, 5-sodium sulfoisophthalic acid, and 5-tetrabutylphosphonium sulfoisophthalic acid; and derivatives thereof. Of the copolymerization components given above, it is preferable to select a biodegradable one.

In the case where polylactic acid is used for the biodegradable mulch film roll for agriculture according to the present invention, since the glass transition temperature of polylactic acid as a simple substance is about 57°C, it is preferable that polylactic acid prepared by selecting a component capable of lowering the glass transition temperature for copolymerization be used or a plasticizer capable of lowering the glass transition temperature be mixed therewith to be used. In this case, since a relatively long polymerization time is required for obtaining a copolymerized polylactic acid with a weight average molecular weight of 50, 000 or more and this is economically disadvantageous, the latter method in which a relatively inexpensively producible homo-polylactic acid and a plasticizer are used in combination is economically advantageous and is particularly preferred. Moreover, as the plasticizer, it is preferred to use a plasticizer that is solid at room temperature, and in this case, the method is preferred from the viewpoint of durability during storage before use such as suppression of bleed-out of the plasticizer and suppression of blocking of the film.

Although examples of the plasticizer that is solid at room temperature include polyethylene glycol with a number average molecular weight of 1, 000 or more, and a block copolymer having a polyether based segment and/or a polyester based segment and having a polylactic acid segment with a number average molecular weight of 1,200 or more and 100,000 or less in one molecule, it is particularly preferred to use the latter block copolymer.

Hereinafter, the block copolymer which is an especially preferred embodiment of a plasticizer used for the present invention (hereinafter, a block copolymer having a polyether based segment and/or a polyester based segment and having a polylactic acid segment with a number average molecular weight of 1,200 or more and 100,000 or less in one molecule is written as "a block copolymer plasticizer") will be described.

The mass ratio of the polylactic acid segment which the block copolymer plasticizer has is preferably less than 50% by mass because it is possible to impart the film with desired flexibility by the addition in a smaller amount thereof, and preferably more than 5% by mass in view of suppression of bleed-out, relative to the whole block copolymer plasticizer. Moreover, the number average molecular weight of the polylactic acid segment in one molecule of a block copolymer plasticizer is preferably 1,200 or more and 10, 000 or less. When the number average molecular weight of the polylactic acid segment which the block copolymer plasticizer has is 1, 200 or more, sufficient affinity is generated between the block copolymer plasticizer and polylactic acid, and moreover, since a part of the segment is incorporated into a crystal formed from polylactic acid which is a base material, an effect of anchoring the plasticizer molecule to the base material is exerted and a great effect on suppression of bleed-out of the block copolymer plasticizer is exhibited. The number average molecular weight of the polylactic acid segment in a block copolymer plasticizer is preferably 2,000 or more and less than 6,000. With regard to the polylactic acid segment which the block copolymer plasticizer has, in the case where an L-lactic acid-derived component accounts for 95% by mass or more and 100% by mass or less relative thereto or a D-lactic acid-derived component accounts for 95% by mass or more and 100% by mass or less relative thereto, it is preferred because bleed-out is particularly suppressed.

Moreover, although the block copolymer plasticizer has a polyether based segment and/or a polyester based segment, in the case where it has a polyether based segment, from the viewpoint that it is possible to impart the film with desired flexibility by the addition in a smaller amount thereof, it preferably has a segment of polyalkylene ether as the polyether based segment and particularly preferably has a segment of polyethylene glycol. In the case where the block copolymer plasticizer has a polyether based segment such as polyalkylene ether including polyethylene glycol, polypropylene glycol, polyethylene glycol•polypropylene glycol copolymer or the like, particularly polyethylene glycol or the like among them, the case is preferable because the block copolymer plasticizer is excellent in modifying efficiency since it has high affinity with polylactic acid and it is possible to impart the film with desired flexibility by the addition in an especially small amount of the plasticizer.

It is preferred that the number average molecular weight of the polyether based segment and/or the polyester based segment in one molecule of a block copolymer plasticizer be 7,000 or more and less than 20,000. By setting the number average molecular weight within the above-mentioned range, it is made possible to allow the composition constituting the biodegradable mulch film for agriculture to have sufficient flexibility, maintain the melt viscosity of the composition at an appropriate level, and stabilize the film-forming processability in an inflation film-forming method or the like.

The biodegradable mulch film roll for agriculture according to the present invention, depending on the intended uses, is commonly a roll of a film with a thickness of 10 µm or more and 50 µm or less, and a film with a thickness of 25 µm or less is frequently used.

The composition constituting the biodegradable mulch film roll for agriculture according to the present invention may contain components other than the previously described ones unless they impair the effect of the present invention. For instance, generally known antioxidant, ultraviolet ray stabilization agent, color protection agent, delustering agent, deodorant, flame retardant, weathering agent, antistatic agent, anti-oxidizing agent, ion exchange agent, crystal nucleating agent, and color pigment, as well as lubricants including inorganic fine particles, organic particles, and other organic lubricants, may be added as needed.

Effective antioxidants include hindered phenolic ones and hindered amine based ones. Effective color pigments include not only inorganic pigments such as carbon black, titanium oxide, zinc oxide, and iron oxide, but also organic pigments such as cyanine based ones, styrene based ones, phthalocyanine based ones, anthraquinone based ones, perinone based ones, isoindolinone based ones, quinophtharone based ones, quinacridone based ones, and thioindigo based ones.

If particles are to be added with the aim of attaining improved lubricity and enhancing blocking resistance, the effective inorganic particles include fine particles of silicon oxides such as silica; various carbonates such as calcium carbonate, magnesium carbonate, and barium carbonate; various sulfates such as calcium sulfate and barium sulfate; various composite oxides such as kaolin and talc; various phosphates such as lithium phosphate, calcium phosphate, and magnesium phosphate; various oxides such as aluminum oxide, titanium oxide, and zirconium oxide; and various salts such as lithium fluoride.

Preferred organic particles include fine particles of calcium oxalate and terephthalates of calcium, barium, zinc, manganese, and magnesium. Effective crosslinked polymer particles include fine particles of a homopolymer or copolymer produced from vinyl based monomers such as divinylbenzene, styrene, acrylic acid, and methacrylic acid. Other preferred ones include organic fine particles of polytetrafluoroethylene, benzo guanamine resin, thermosetting epoxy resin, unsaturated polyester resin, thermosetting urea resin, and thermosetting phenol resin.

There are no specific limitations on the average particle diameter of the inorganic particles and organic particles, but it is preferably 0.01 to 10 µm, more preferably 0.1 to 5 µm, and particularly preferably 1 to 4 µm.

Effective organic lubricants include aliphatic hydrocarbon based ones such as liquid paraffin, native paraffin, synthetic paraffin, and polyethylene; fatty acid based ones such as stearic acid, lauric acid, hydroxystearic acid, and a hardened castor oil; fatty acid amide based ones such as stearic acid amide, oleic acid amide, erucic acid amide, lauric acid amide, ethylenebis stearamide, ethylenebis oleamide, and ethylenebis lauramide; fatty acid metal salts such as aluminum stearate, lead stearate, calcium stearate, and magnesium stearate; polyvalent alcohol fatty acid (partial) ester based ones such as glycerol fatty acid ester, and sorbitan fatty acid ester; and long-chain fatty acid ester based ones such as stearic acid butyl ester and montan wax.

Next, with regard to a method for producing the biodegradable mulch film roll for agriculture according to the present invention, the case of using polylactic acid as a preferred example will be described in detail.

Polylactic acid for the present invention can be produced by, for instance, a process as follows. A material formed mainly of L-lactic acid or D-lactic acid as a lactic acid component may be used as starting material, and a hydroxycarboxylic acid other than the lactic acid component may be used in combination. A cyclic ester intermediate of a hydroxycarboxylic acid such as lactide and glycolide may also be used as starting material.

Polylactic acid can be produced by direct dehydration and condensation of the starting material, or ring opening polymerization of the cyclic ester intermediate. In the case where direct dehydration and condensation, for instance, are carried out for production, a high-molecular weight polymer is obtained by performing azeotropic dehydration and condensation of lactic acid or a mixture of lactic acid and a hydroxycarboxylic acid preferably in the presence of an organic solvent, particularly a phenyl ether based solvent, or particularly preferably by removing water from the solvent distilled out from the azeotropic step to provide a virtually water-free solvent, followed by feeding it back to the reaction system for polymerization.

It is also known that a high-molecular weight polymer can be produced also by subjecting a cyclic ester intermediate such as lactide to ring opening polymerization under reduced pressure using a catalyst such as tin octylate. Here, a polymer with a smaller lactide content can be produced by, for instance, the following methods: the method of controlling the conditions for removal of water and low molecule compounds in the organic solvent during heated reflux, the method of deactivating the catalyst after completion of the polymerization reaction to depress the depolymerization reaction, and the method of heat-treating the resulting polymer.

Next, a more specific example of a block copolymer plasticizer having a polylactic acid segment with a number average molecular weight of 1,200 or more and 10,000 or less in one molecule and having a polyether based segment and/or a polyester based segment, which is used in one of preferred embodiments of the present invention, will be described.

Polyethylene glycol (hereinafter, polyethylene glycol is referred to as PEG) having hydroxyl end groups at both terminals is prepared. The number average molecular weight of PEG having hydroxyl end groups at both terminals is commonly calculated from the hydroxyl value determined by a neutralization method or the like in the case where it is a commercial product or the like. In a system in which w_{A} parts by mass of a lactide is added to w_{B} parts by mass of PEG having hydroxyl end groups at both terminals, by subjecting the lactides to ring opening addition polymerization to the both hydroxyl end groups of PEG and allowing them to sufficiently undergo a reaction, a PLA(A)-PEG(B)-PLA(A) type block copolymer can be virtually obtained (herein, PLA refers to polylactic acid). This reaction is carried out in the presence of a catalyst such as tin octylate, as needed. The number average molecular weight of one polylactic acid segment in the block copolymer plasticizer can be virtually determined as (1/2) × (w_{A}/w_{B}) × M_{PEG}. Moreover, the mass ratio of the polylactic acid segment component to the whole block copolymer plasticizer can be virtually determined as 100 × w_{A}/(w_{A} + w_{B})%. Furthermore, the mass ratio of the plasticizer component excluding the polylactic acid segment component to the whole block copolymer plasticizer can be virtually determined as 100 × w_{B}/(w_{A} + w_{B}) %.

In the case where the block copolymer plasticizer contains an unreacted PEG, a substance reacted with PEG having a polylactic acid segment with a number average molecular weight of less than 1,200 at the end, a by-product such as a lactide oligomer, impurities and the like in large quantities, for instance, it is preferred to remove them by the following purification method. The block copolymer plasticizer synthesized is uniformly dissolved in a suitable good solvent such as chloroform, and thereafter a suitable poor solvent such as a water/methanol mixed solution, diethyl ether or the like is added dropwise thereto. Alternatively, the block copolymer plasticizer is allowed to precipitate, for instance, by adding the good solvent solution to a large excess of a poor solvent, the precipitates are separated by centrifugation, filtration or the like, and thereafter the solvent is evaporated. The block copolymer plasticizer is immersed in water, and then, heated at 50 to 90°C and stirred as needed, and thereafter an organic phase containing the block copolymer plasticizer is extracted and dried to remove water. The purification method is not limited to the method given above and the above-mentioned operation may be repeated a plurality of times, as needed. It is preferred to remove a by-product and the like such as a lactide oligomer because, when a composition containing polylactic acid is prepared, it is made possible to prevent the composition from turning into a low viscosity and maintain the melt viscosity of the composition at an appropriate level, and to stabilize the processing.

In the case where a plasticizer of a PLA (A) -PEG (B) -PLA (A) type block copolymer is produced by the method given above, the molecular weight of one polylactic acid segment which the plasticizer produced has can be determined by the following method. That is, using a deuterated chloroform solution of the block copolymer plasticizer, on the basis of a chart obtained by ¹H-NMR measurement, the molecular weight can be calculated according to the calculation formula: {I_{PLA} × (the molecular weight of a polylactic acid monomer unit)/(the number of polylactic acid segments)}/{I_{PEG} × (the molecular weight of a PEG monomer unit) / (the number of protons chemically equivalent to one another)} × M_{PEG}. In short, in the case where a plasticizer of a PLA (A) -PEG (B) -PLA (A) type block copolymer is prepared, the molecular weight is determined to be {I_{PLA} × 72/2}/{I_{PEG} × 44/4} × M_{PEG}. Herein, I_{PEG} refers to the integrated intensity of the signal derived from hydrogen at a methylene group in the PEG main chain, and I_{PLA} refers to the integrated intensity of the signal derived from hydrogen at a methine group in the PLA main chain. In the case where the reaction rate of the lactide at the time of synthesizing the block copolymer plasticizer is sufficiently high and the plasticizer is synthesized under a condition in which almost all lactides are allowed to undergo a ring opening addition to the end parts of PEG, in many cases, it is preferred to determine the molecular weight of one polylactic acid segment which the plasticizer has by the above-mentioned method based on a chart obtained by ¹H-NMR measurement.

For obtaining a composition containing polylactic acid and a plasticizer, an aliphatic aromatic polyester or other components (composition constituting the biodegradable mulch film for agriculture), although it is possible to uniformly mix the solutions prepared by dissolving each component in a solvent and then remove the solvent to produce a composition, it is preferred to employ a melt-kneading method, which is a practical production method since the steps of dissolving raw materials in a solvent, removing the solvent, and the like are unnecessary, in which a composition is produced by melt-kneading each component. There are no specific limitations on the melt-kneading method, and common mixers including a kneader, roll mill, Banbury mixer, and single or twin screw extruder may be used. In particular, it is preferable to use a single or twin screw extruder from the viewpoint of productivity.

There are no specific limitations on the order of mixing, and for instance, polylactic acid and a plasticizer may be dry-blended first and then fed to a melt-kneading machine, or polylactic acid and a plasticizer may be melt-kneaded to prepare a masterbatch, followed by melt-kneading of the masterbatch and polylactic acid or the other components. Or, as needed, other components may be melt-kneaded together, or polylactic acid and other additives may be melt-kneaded first to prepare a masterbatch, followed by melt-kneading of this masterbatch with polylactic acid and a plasticizer component. Moreover, in the case where a component such as a plasticizer that is liquid at room temperature is added, separately from a component that is solid at room temperature, the component can also be added through a vent hole as a raw material supply hole of an extruder using a metering pump.

The temperature at the time of melt-kneading is preferably set in the range of 150°C to 240°C, to prevent degradation of the polylactic acid, it is more preferably set in the range of 200°C to 220°C.

The biodegradable mulch film for agriculture according to the present invention, for instance, by using the composition obtained by the method given above, can be produced by conventional film production methods including inflation molding, T-die casting, and T-die casting followed by biaxial stretching, and the like.

For producing the biodegradable mulch film roll for agriculture according to the present invention, for instance, when the composition obtained by the previously described method is once formed into a chip shape, and melt-kneaded again to extrude for film-forming, the chips are preferably dried at 60 to 110°C for 6 hours or more to allow the moisture content in the composition to be 1,200 ppm (in terms of mass) or less. Furthermore, it is preferred that vacuum drying be carried out under highly-reduced pressure at a reduced pressure degree of 10 Torr or less to reduce the lactide content in the composition. By allowing the moisture content in the composition to be 1,200 ppm (in terms of mass) or less and reducing the lactide content, preferably, hydrolysis during melt-kneading is prevented to thereby make it possible to prevent the reduction in molecular weight and maintain the melt viscosity at an appropriate level, and to stabilize the film-forming step. Moreover, from a similar point of view, when the composition is once formed into a chip shape or melt-extruded for film-forming, it is preferred that the melt extrusion process be carried out while moisture and volatile substances such as low molecular weight substances are removed using a biaxial extruder with a vent hole.

As a film-forming method for the biodegradable mulch film roll for agriculture according to the present invention, an inflation method is preferred. In the case where the roll is produced by an inflation method, for instance, the composition prepared by such a method previously described is melt-extruded using a biaxial extruder with a vent hole to introduce the composition into an annular die, extruded from the annular die while a dry air is fed into the inside, to form the composition into a balloon state (bubble), furthermore, uniformly air-cooled and solidified' using an air ring, and withdrawn at a predetermined withdrawing rate while being flatly folded by a nip roll, and thereafter, one end thereof, or both ends thereof as necessary, may be cut-opened and the film may be wound.

In this case, although the discharge amount from an annular die, the withdrawing rate of a nip roll, and the blow rate for the bubble may be adjusted so that the thickness is commonly 5 µm or more and 50 µm or less, preferably 10 µm or more and 50 µm or less, it is preferred that a spiral type one be used as the annular die in order to enhance the thickness precision and the uniformity.

Moreover, although the extrusion temperature of the composition containing polylactic acid and the like is commonly within the range of 150 to 240°C, the temperature of the annular die is important in order to enhance the thickness precision and the uniformity and furthermore to impart the roll with good winding shape and unwindability, and the temperature of the annular die is within the range of 150 to 190°C, preferably 150 to 170°C.

Although the blow rate for the bubble depends upon the relationship with the discharge amount and the withdrawing rate of a nip roll, since, even in the case where the rate is too low or too high, anisotropy may be excessively generated in the film, and moreover, in the case where, in particular, the rate is too high, the bubble is liable to be unstable, the rate is commonly within the range of 2.0 to 4.0.

Furthermore, after formed into a film, the film may be subjected to various surface treatments for the purpose of enhancing the printability, lamination appropriateness, coating adaptability and the like. Available surface treatment methods include corona discharge treatment, plasma treatment, flame treatment, and acid treatment, and any of them can be used effectively, but corona discharge treatment is the most preferable because it can be performed continuously, needs only simple equipment that can be easily placed to conventional film production facilities, and can be performed by simple operations.

### EXAMPLES

The present invention will be illustrated below in greater detail with reference to Examples, but it should be understood that the present invention is not construed as being limited thereto.

### [Measurement and evaluation methods]

Measurements and evaluations made in Examples were carried out under the following conditions.

### (1) Moisture permeability: Wt (g/(m²•day))

Using a measurement sample cut into a square piece with a side of 150 mm, in accordance with JIS K7129-2008 (Method A), the moisture permeability was measured by a dry and wet sensing method under the conditions of a measuring area of 80 mmφ, a temperature of 40°C and a relative humidity of 90%RH.

### (2) Glass transition temperature of composition constituting film: Tg (°C)

About 5 mg of a film sample was weighed and placed in a sample pan to prepare a test portion. In accordance with JIS K7121-1987, the measurement by the differential scanning calorimeter (DSC) was carried out while the temperature being kept for 5 minutes at -50°C and then raised to 100°C at a rate of temperature increase of 20°C/minute. From the DSC curve observed, the intermediate point glass transition temperature was determined as Tg. In the case where a plurality of intermediate point glass transition temperatures were observed, an intermediate point glass transition temperature observed on the most high temperature side was defined as Tg.

### (3) Elongation of film: E (%)

A film was cut into dimensions of 150 mm (longitudinal direction) × 10 mm (width direction) with the longitudinal direction being assumed to be the test direction, and the measurement was carried out under an atmosphere of a temperature of 23°C and a relative humidity of 65%RH. Using TENSILON universal testing machine UTC-100 type (supplied by ORIENTEC Co., LTD.), the tensile test was carried out under the conditions of an initial distance between chucks of 50 mm and a tensile speed of 300 mm/minute, the strain obtained when a sample was broken was read from the stress-strain curve, the test was performed 5 times in total, and an average value was calculated. This value was defined as the elongation.

Moreover, from the values of elongation before and after the storage test described below, the equation: elongation retention rate = (elongation after storage test/elongation before storage test) × 100 (%) was defined.

### (4) Unwindability

A roll sample was stored for 3 days under an atmosphere of a temperature of 23°C and a relative humidity of 65%RH, and thereafter, an iron shaft with a diameter smaller than the inner diameter of the paper tube was passed through a paper tube of the roll sample. Both sides of the iron shaft were hooked so that the roll was kept horizontal and was allowed to be in a freely rotatable state. The state of unwinding thereof on unwinding the film at a rate of 10 m/minute was visually observed and evaluated according to the following criteria.
Circle (Excellent): Unwinding could be performed smoothly without problems.
Triangle (Good): Due to slight blocking, although irregular unwinding was sometimes observed, deformation or breakage of the film did not occur.
X mark (Poor) : The case in which the state did not fall under Circle or Triangle.

### (5) Mulching

With a roll sample, at a farm field located in Ibaraki Prefecture, the mulching test of the mulch film was carried out in the middle of March. Mulching and ridging were simultaneously performed using a tractor with a mulcher, and a ridge having a semicircle-shaped cross section of a ridge width of 60 cm and a ridge height of about 35 cm was formed. Moreover, the ridge length was set to 50 cm for the respective levels, and at each level, the mulching test of the respective level was performed under the same conditions with respect to the mulching speed and the like. The farm field where the mulching test was performed was somewhat clayey and contained a number of soil lumps which were relatively hard and had a diameter of 3 cm or more. As such, the condition was that in which a film with a low elongation was somewhat easily to break. Circle (Excellent): Mulching could be performed over the whole length of 50 cm without problems.
Triangle (Good) : The case in which the roll sample did not fall under either Circle or × mark.
× mark (Poor): Breakage of the film was generated two or more times, and the film was virtually not able to withstand the mulching.

### [Polylactic acid used]

### (Polylactic acid PL1)

Weight average molecular weight = 200,000, D-isomer content = 12.0% by mole, melting point = undetermined

### (Polylactic acid PL2)

Weight average molecular weight = 220,000, D-isomer content = 1.4% by mole, melting point = 166°C

The weight average molecular weight and number average molecular weight were measured using Waters 2690, supplied by Nihon Waters K.K., at a column temperature of 40°C with chloroform as the solvent and were calculated in terms of polymethyl methacrylate.

### [Plasticizer used]

### (Plasticizer PS1)

By mixing 62 parts by mass of polyethylene glycol with a number average molecular weight of 8,000, 38 parts by mass of L-lactide and 0.1 parts by mass of tin octylate and allowing the mixture to undergo a polymerization at 160°C under a nitrogen atmosphere for 3 hours, Plasticizer PS1 having polylactic acid segments with a number average molecular weight of 2, 500 at both terminals of polyethylene glycol was obtained. Immediately after Plasticizer PS1 was obtained, it was subjected to packing for making it moisture-proof and was stored.

The temperature measured according to JIS K0065-1992 as the freezing point of Plasticizer PS1 was determined to be 60°C.

### [Aliphatic polyester resin and aliphatic aromatic polyester resin used]

### (Polyester PA1)

Polybutylene succinate adipate based resin (trade name "Bionolle" #3001, supplied by Showa Denko K.K.)

### (Polyester PA2)

Polybutylene succinate based resin (trade name "GSPIa" AZ91T, supplied by Mitsubishi Chemical Corporation)

### (Polyester PA3)

Polybutylene adipate terephthalate resin (trade name "ecoflex", supplied by BASF Japan Ltd.)

### [Organic lubricant used]

### (Lubricant SL1)

Stearic acid amide (trade name "ALFLOW S-10", supplied by NOF CORPORATION)

### [Particles used]

### (Inorganic particles PT1)

Talc (trade name "SG-95", supplied by NIPPON TALC Co., Ltd.), average particle diameter = 2.5 µm

The above-mentioned average particle diameter is a volume-cumulative median diameter (Median diameter), namely, a particle diameter (50% diameter [µm]) read at a point where the volume indicates 50% on an volume-cumulative curve determined by defining the whole volume of powder collected as 100%, and was measured using Microtrac FRA leaser type particle size analyzer.

### [Production of Film roll 1]

A mixture of 30% by mass of Polyester PA1, 66% by mass of Polyester PA2, 1% by mass of Lubricant SL1 and 3% by mass of Inorganic particles PT1 was fed into a twin screw extruder equipped with a vacuum vent, having a screw diameter of 44 mm and a cylinder temperature of 190°C, and melt-kneaded to be homogenized while the vacuum vent part was degassed, and thereafter formed into a chip shape to obtain Composition 1.

This composition was dried by dehumidified hot air at a temperature of 60°C and a dew point of -25°C for 10 hours, and thereafter a mixture of 70% by mass of Composition 1 and 30% by mass of Polyester PA3 was fed into a single screw extruder having a screw diameter of 65 mm and an extruder cylinder temperature of 190°C. The mixture was extruded upward, being formed into a bubble shape, at a blow rate of 3.4 from a spiral type annular die having a diameter of 250 mm, a lip clearance of 1.3 mm and a temperature of 165°C, air-cooled by a cooled ring, and withdrawn at 30 m/minute while being folded by a nip roll arranged above the die. Both end parts thereof were cut-opened by edge cutters and divided into two films, and each film with a width of 1, 350 mm was wound around a paper tube with an inner diameter of 1.5 inches and a thickness of 3 mm by 200 m. By adjusting a discharge amount, a film roll of a film with a final thickness of 20 µm was prepared.

With regard to this film roll, the glass transition temperature was -33°C and the time required for the biodegradability determined according to JIS K6953-2000 to amount to 60% was 50 days.

### [Production of Film roll 2]

A mixture of 54% by mass of Polylactic acid PL1, 17% by mass of Polylactic acid PL2, 25% by mass of Plasticizer PS1, 1% by mass of Lubricant SL1 and 3% by mass of Inorganic particles PT1 was fed into a twin screw extruder equipped with a vacuum vent, having a screw diameter of 44 mm and a cylinder temperature of 190°C, and melt-kneaded to be homogenized while the vacuum vent part was degassed, and thereafter formed into a chip shape to obtain Composition 2.

This composition was dried by dehumidifying hot air at a temperature of 60°C and a dew point of -25°C for 10 hours, and thereafter a mixture of 70% by mass of Composition 2 and 30% by mass of Polyester PA3 was fed into a single screw extruder having a screw diameter of 65 mm and an extruder cylinder temperature of 190°C. The mixture was extruded upward, being formed into a bubble shape, at a blow rate of 3.4 from a spiral type annular die having a diameter of 250 mm, a lip clearance of 1.3 mm and a temperature of 165°C, air-cooled by a cooled ring, and withdrawn at 30 m/minute while being folded by a nip roll arranged above the die. Both end parts thereof were cut-opened by edge cutters and divided into two films, and each film with a width of 1, 350 mm was wound around a paper tube with an inner diameter of 1.5 inches and a thickness of 3 mm by 200 m. By adjusting a discharge amount, a film roll of a film with a final thickness of 20 µm was prepared.

With regard to this film roll, the glass transition temperature was 31°C and the time required for the biodegradability determined according to JIS K6953-2000 to amount to 60% was 71 days.

### (Example 1)

A moisture-proof film with a thickness of 145 µm, having a layered constitution of high density polyethylene (100) /low density polyethylene (15)/linear low density polyethylene (heat seal layer) (30) (each number in parentheses: thickness of each layer [µm]) was used as a packaging material. The film was heat-sealed at a part of 5 mm in width so that the side of linear low density polyethylene faced inward, to be formed into a bag shape, and thereafter Film roll 1 was inserted into the bag and the end part of 5 mm in width of the bag was heat-sealed to make tight seal. Furthermore, from the outside, the whole surface of the outer circumference of the bag was wrapped two times with kraft paper (Layer A) of 75 g/m², and thereafter both end parts of the kraft paper used for wrapping were bent at 180° and fixed with an adhesive tape in a state of closing the openings, to prepare a package. The, moisture permeability of the film (packaging material) used for the inside of the package was 0.8 (g/(m²•day)).

For one year after the package was produced in the beginning of March, the package was stored in a warehouse without air-conditioning located in Otsu city, Shiga Prefecture, and in a state with no direct sunlight, and was evaluated for the elongation retention rate of the film before and after the storage test, the unwindability after storage and the mulching (Table 1). During the storage test period, the highest temperature in Otsu city, Shiga Prefecture, was 37.5°C recorded in September and the lowest temperature was -3.9°C recorded in January.

### (Example 2)

A moisture-proof film with a thickness of about 65 µm, having a layered constitution of biaxially oriented polypropylene terephthalate (20)/vapor-deposited aluminum (layer of aluminum) (0.05)/low density polyethylene (15)/linear low density polyethylene (heat seal layer) (30) (each number in parentheses: thickness of each layer [µm]) was used. The film was heat-sealed at a part of 5 mm in width so that the side of linear low density polyethylene faced inward, to be formed into a bag shape, and thereafter Film roll 1 was inserted into the bag and the end part of 5 mm in width of the bag was heat-sealed to make tight seal. Furthermore, from the outside, the whole surface of the outer circumference of the bag was wrapped two times with kraft paper (Layer A) of 75 g/m², and thereafter both end parts of the kraft paper used for wrapping were bent at 180° and fixed with an adhesive tape in a state of closing the openings, to prepare a package. The moisture permeability of the film (packaging material) used for the package was 0.7 (g/(m²•day)).

The package was evaluated in the same manner as that in Example 1 (Table 1).

### (Example 3)

A moisture-proof film with a thickness of 79 µm, having a layered constitution of biaxially oriented polyethylene terephthalate (12)/low density polyethylene (15)/aluminum foil (layer of aluminum) (7)/low density polyethylene (15)/linear low density polyethylene (heat seal layer) (30) (each number in parentheses: thickness of each layer [µm]) was used. The film was heat-sealed at a part of 5 mm in width so that the side of linear low density polyethylene faced inward, to be formed into a bag shape, and thereafter Film roll 1 was inserted into the bag and the end part of 5 mm in width of the bag was heat-sealed to make tight seal. Furthermore, from the outside, the whole surface of the outer circumference of the bag was wrapped two times with kraft paper (Layer A) of 75 g/m², and thereafter both end parts of the kraft paper used for wrapping were bent at 180° and fixed with an adhesive tape in a state of closing the openings, to prepare a package. The moisture permeability of the film (packaging material) used for the package was 0.2 (g/(m²•day)).

The package was evaluated in the same manner as that in Example 1 (Table 1).

### (Example 4)

A moisture-proof film with a thickness of 79 µm, having a layered constitution of biaxially oriented polyethylene terephthalate (12)/low density polyethylene (15)/aluminum foil (layer of aluminum) (7)/low density polyethylene (15)/linear low density polyethylene (heat seal layer) (30) (each number in parentheses: thickness of each layer [µm]) was used. The film was heat-sealed at a part of 5 mm in width so that the side of linear low density polyethylene faced inward, to be formed into a bag shape, and thereafter Film roll 2 was inserted into the bag and the end part of 5 mm in width of the bag was heat-sealed to make tight seal. Furthermore, from the outside, the whole surface of the outer circumference of the bag was wrapped two times with kraft paper (Layer A) of 75 g/m², and thereafter both end parts of the kraft paper used for wrapping were bent at 180° and fixed with an adhesive tape in a state of closing the openings, to prepare a package. The moisture permeability of the film (packaging material) used for the package was 0.2 (g/(m²•day)).

The package was evaluated in the same manner as that in Example 1 (Table 1). However, impact was forcibly applied thereto in the following manner before the evaluation of the unwindability after storage test and the mulching. That is, the package was placed on the flat horizontal concrete floor surface, supported by hand and vertically erected, thereafter the package was allowed to fall by its self-weight by releasing the hand, impact was applied thereto, and the package was subjected to the evaluation of the unwindability and the mulching.

### (Example 5)

A moisture-proof film with a thickness of 79 µm, having a layered constitution of biaxially oriented polyethylene terephthalate (12)/low density polyethylene (15)/aluminum foil (layer of aluminum) (7)/low density polyethylene (15)/linear low density polyethylene (heat seal layer) (30) (each number in parentheses: thickness of each layer [µm]) was used. The film was heat-sealed at a part of 5 mm in width so that the side of linear low density polyethylene faced inward, to be formed into a bag shape, and thereafter Film roll 2 was inserted into the bag and the end part of 5 mm in width of the bag was heat-sealed to make tight seal. The moisture permeability of the film (packaging material) used for the package was 0.2 (g/(m²•day)).

The package was evaluated in the same manner as that in Example 4 (Table 1). Specifically, the package was placed on the flat horizontal concrete floor surface, supported by hand and vertically erected, thereafter the package was allowed to fall by its self-weight by releasing the hand, impact was applied thereto, and then the package was evaluated for the unwindability and the mulching.

**[Table 1]**

| | | Example 1 | Example 2 | Example 3 | Example 4 | Example 5 | Comparative Example 1 | Comparative Example 2 |
|---|---|---|---|---|---|---|---|---|
| Biodegradable product for agriculture and forestry | | Film roll 1 | Film roll 1 | Film roll 1 | Film roll 2 | Film roll 2 | Film roll 1 | Film roll 2 |
| Glass transition temperature of composition | °C | -33 | -33 | -33 | 31 | 31 | -33 | 31 |
| State of plasticizer at room temperature | | - | - | - | Solid (freezing point: 25°C or higher) | Solid (freezing point: 25°C or higher) | - | Solid (freezing point: 25°C or higher) |
| Packaging material (inside) * | | HDPE/LDPE/ LLDPE | OPP/Vapor- deposited aluminum/LDPE/ LLDPE | PET/LDPE/ Aluminum foil/LDPE/ LLDPE | PET/LDPE/ Aluminum foil/LDPE/ LLDPE | PET/LDPE/ Aluminum foil/LDPE/ LLDPE | LLDPE | - |
| Packaging material (outside) | | Kraft paper | Kraft paper | Kraft paper | Kraft paper | - | - | Kraft paper |
| Moisture permeability of packaging material (inside) | g/(m²·day) | 0.8 | 0.7 | 0.2 | 0.2 | 0.2 | 3 | - |
| Elongation before storage | % | 360 | 360 | 360 | 332 | 332 | 360 | 332 |
| Elongation after storage | % | 252 | 292 | 342 | 312 | 315 | 58 | 0 |
| Elongation retention rate | % | 70 | 81 | 95 | 94 | 95 | 16 | 0 |
| Unwindability | | ○ | ○ | ○ | ○ | Δ | ○ | X (Unwinding fails to be performed due to blocking) |
| Mulching | | ○ | ○ | ○ | ○ | ○ | x | × |
| Overall evaluation | | ○ | ○ | ○ | ○ | Δ | × | x |
| * HDPE: High density polyethylene, LDPE: Low density polyethylene, LLDPE: Linear low density polyethylene, OPP: Biaxially oriented polypropylene, PET: polyethylene terephthalate, Al: Aluminum | | | | | | | | |

### (Comparative Example 1)

A tube made of linear low density polyethylene with a thickness of 150 µm and a folding width of 200 mm was used, Film roll 1 was inserted thereinto, and thereafter both ends of 5 mm in width of the tube made of the polyethylene were heat-sealed to make tight seal and prepare a package. The moisture permeability of the tube made of linear low density polyethylene used was be 3 (g/(m²•day)).

The package was evaluated in the same manner as that in Example 1 (Table 1).

### (Comparative Example 2)

The whole surface of the outer circumference of Film roll 2 was wrapped two times with kraft paper (layer A) of 75 g/m², and thereafter both end parts of the kraft paper used for wrapping were bent at 180° and fixed with an adhesive tape in a state of closing the openings, to prepare a package. The moisture permeability of the kraft paper used was 100 (g/(m²•day)) or more.

The package was evaluated in the same manner as that in Example 1 (Table 1).

Since each of the packages in Examples 1 to 5 is a package comprising a packaging material and a biodegradable product for agriculture and forestry, the packaging material has a moisture permeability of 1 g/(m²•day) or less, and the packaging material covers the biodegradable product for agriculture and forestry, these packages satisfy the requirements prescribed in the present specification and are packages which are excellent in elongation retention rate after storing for 1 year and have practicality such that there is no problem in the unwindability and the mulching.

On the other hand, in Comparative Examples, the elongation retention rate after storing for 1 year is insufficient, and as a result, the degree of unwindability or mulching is too poor for practical use.

### INDUSTRIAL APPLICABILITY

The present invention relates to a package comprising a packaging material and a biodegradable product for agriculture and forestry, and in particular, aims to provide a biodegradable mulch film roll for agriculture, which has excellent storage stability and excellent handling properties. Although the biodegradable mulch film roll for agriculture is commonly used at a 1-year cycle and it is difficult to reuse one that is prepared this year again next year, the biodegradable mulch film roll for agriculture stored in the package according to the present invention, including an unused part of the roll left behind after use thereof by a farmer who purchased it, can be used again next year, and from the standpoint of the manufacturer, production in advance, as well as production by order, is also possible. Furthermore, with regard to the mulch film roll for agriculture in the package according to the present invention, blocking caused by degradation and moisture absorption of the mulch film during storage, an impression made by blow when impact is locally applied during transport or during handling, and the like hardly occurs. As such, according to the package of the present invention, there can be provided a biodegradable product for agriculture and forestry excellent in practicality.

## Claims

1. A package comprising a packaging material and a biodegradable product for agriculture and forestry, wherein the packaging material has a moisture permeability of 1 g/(m²•day) or less and the packaging material covers the biodegradable product for agriculture and forestry.

2. The package according to claim 1, wherein the packaging material is a layered body, one outermost layer thereof is a heat seal layer, the heat seal layer is allowed to face inward (the side of the biodegradable product for agriculture and forestry) and an end part is covered.

3. The package according to claim 1 or 2, wherein the packaging material is a layered body and has a layer of aluminum.

4. The package according to any one of claims 1 to 3, wherein the packaging material is a layered body, one outermost layer thereof is a layer of paper, a film, a foam sheet, nonwoven fabric, or a foamed body (hereinafter, this layer is referred to as Layer A), the Layer A is allowed to face outward (the side where the biodegradable product for agriculture and forestry is not located) and the packaging material covers the biodegradable product for agriculture and forestry.

5. The package according to any one of claims 1 to 4, wherein the biodegradable product for agriculture and forestry is a biodegradable mulch film roll for agriculture.

6. The package according to claim 5, wherein the biodegradable mulch film roll for agriculture comprises a composition formed mainly of an aliphatic polyester and the glass transition temperature Tg of the composition is 45°C or lower.

7. The package according to claim 6, wherein the aliphatic polyester is polylactic acid and the composition contains a plasticizer that is solid at room temperature.
